Europäisches Patentamt

European Patent Office

Office européen des brevets

(19)

(11) Publication number: **0 007 201**

**B1**

(12) **EUROPEAN PATENT SPECIFICATION**

(45) Date of publication of patent specification: **13.01.82**

(21) Application number: **79301245.1**

(22) Date of filing: **27.06.79**

(51) Int. Cl.³: **B 29 D 23/00, B 29 C 1/00 //F16L9/16**

(54) Method of and mold for producing tubular bodies having annular grooves.

(30) Priority: **28.06.78 JP 78967/78**

(43) Date of publication of application:
**23.01.80 Bulletin 80/2**

(45) Publication of the grant of the European patent:
**13.01.82 Bulletin 82/2**

(84) Designated Contracting States:
**DE FR GB IT NL**

(56) References cited:
**DE - A - 1 479 589**
**GB - A - 1 109 285**
**US - A - 3 474 999**

(73) Proprietor: **SEKISUI KAGAKU KOGYO KABUSHIKI KAISHA**
**4-4 Nishitenma 2-chome Kita-ku**
**Osaka shi Osaka (JP)**

(72) Inventor: **Mayumi, Masakatsu**
**6-30 Nishi 1-Chome Nakagawa**
**Ikuno-ku, Osaka-shi (JP)**
Inventor: **Mitooka, Kenji**
**2983, Kozu Minamikata**
**Okayama-shi, Okayama-ken (JP)**
Inventor: **Fujiwara, Sigeharu**
**419, Kouzu**
**Okayama-shi, Okayama-ken (JP)**
Inventor: **Okuyama, Takeshi**
**2-3, Saga Tenryuji Nakajima-cho**
**Ukyo-ku, Kyoto-shi (JP)**

(74) Representative: **Senior, Alan Murray et al,**
**J.A. KEMP & CO 14 South Square Gray's Inn**
**London WC1R 5EU (GB)**

## Method of and mold for producing tubular bodies having annular grooves

This invention relates to a method for producing reinforced plastic tubular bodies having annular grooves for securing packings or lock rings, such as rubber ring-type pipe couplings, and to a mold therefore.

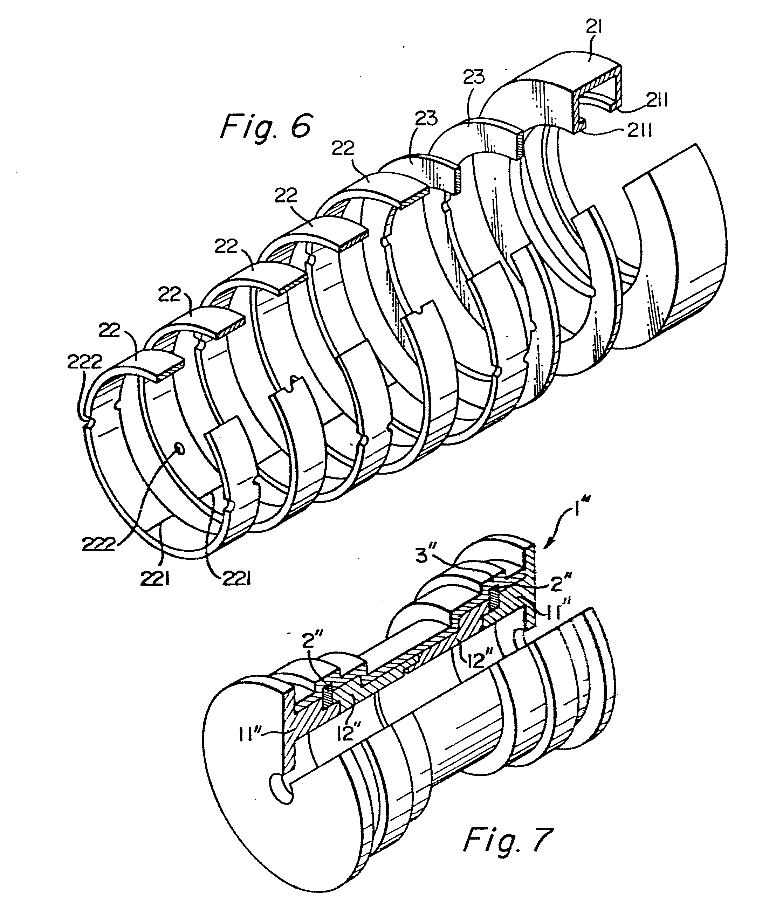

A known conventional method for producing plastic tubular articles of this kind, is now described with reference to Figure 7 of the accompanying drawings which is a partly broken-away perspective view of a molded body on a mold. As shown in Figure 7, the method comprises splitting a mold 1″ into an outer mold member 11″ and an inner mold member 12″ at a part at which to form an annular groove, making the inward part of the outer mold member 11″ smaller in diameter, fitting a groove former 2″ in the smaller diameter part, holding it with the inner mold member 12″ to assemble the mold, wrapping a molding material around it to form a molding material layer 3″, curing the molding material layer 3″, removing the outer mold member 11″, removing the groove former 2″ toward the inward space of the resulting pipe, and then removing the inner mold member 12″ to assemble the mold, wrapping a molding material around it to form a molding material layer 3″, removing the outer mold member 11″, removing the groove former 2″ toward the inward space of the resulting pipe, and them removing the inner mold member 12″. The groove former 2″ is, for example, an annular structure which is made of an elastic material such as rubber or synthetic resins, or an annular structure made of a hard material such as metal and split so as to be pulled out toward the inward space of the resulting plastic tubular body. When the annular structure made of a hard material is used as the groove former 2″, the accuracy of forming an annular groove is excellent, but difficulties are encountered in separating the peripheral surface of the groove former from the surface of the annular groove. Specifically, at the early stage of separating the groove former, it must be pulled in a direction perpendicular to the groove surface, and the two side surfaces of the groove former should always be separated in the shearing direction. Accordingly, even if the molding surface of the groove former has been subjected to mold-release treatment, it is extremely difficult to pull away the groove former. The use of a soft material, on the other hand, has the defect that the accuracy of forming an annular groove is reduced. The above method and apparatus are known, for instance from British Patent Specification No. 1109285.

It is an object of this invention to provide a mold and a molding method which remove the aforesaid defects of the prior art technique, can permit easy removal of a groove former, and which can give reinforced plastic tubular bodies having annular grooves of superior shapes and dimensional accuracy.

In one aspect the present invention provides a method of producing a reinforced plastic tubular body having an internal annular groove, which comprises mounting an annular groove former at a predetermined position on a mold body, forming a layer of a molding material around the resulting assembly, curing the layer of molding material and separating the mold body from the cured layer of molding material characterised in that the annular groove former includes a core and a surface layer of elastic material provided so as to be between the core and the layer of molding material, and in that after separating the mold body from the cured layer the annular groove former is removed from the internal groove thus formed in the cured layer of molding material by removing the core and the surface layer from said groove in that sequence.

In another aspect the present invention provides a mold for the production of a reinforced plastic tubular body having an internal annular groove, said mold comprising a mold body and, detachably mounted on a predetermined position thereon, an annular groove former, characterised in that said groove former includes a core and a surface layer of elastic material provided so as to be, in use, between the core and a layer of molding material formed around the mold, and in that said core is removable from an internal annular groove formed in a layer of molding material formed on the mold prior to removal of said surface layer from said groove.

With the invention, accurate molding and ease of release are obtained.

Some embodiments of the present invention are described below by way of example with reference to Figures 1 to 6 of the accompanying drawings in which:

Figure 1 is a partly broken-away perspective view for illustrating the first half of the molding method of this invention in one embodiment of the invention;

Figure 2 is a partly broken-away perspective view for illustrating the second half of the molding method of this invention in the above embodiment;

Figure 3 is a partly broken-away perspective view showing a part of an embodiment of the mold of this invention;

Figures 4 and 5 are partly broken-away perspective views showing groove formers after assembling for use in the mold of this invention;

Figure 6 is a partly broken-away perspective view showing the groove former in Figure 5 before assembling.

A mold body for producing a pipe coupling having annular grooves is shown at 1 and 1′.

The mold bodies 1 and 1' can be secured to a support shaft 3 by clamping means 4 and 4'. The mold bodies 1 and 1' respectively have a larger diameter at end portions 12 and 12' than at central portions 11 and 11'. A recess 111 is provided at the inner periphery of the end of the central portion 11, and a recess 111', at the outer periphery of the end of the central portion 11'. These recesses 111 and 111' are adapted for fitting at the time of assembling. Collars 13 and 13' are provided respectively at the outer side edges of the end portions 12 and 12'.

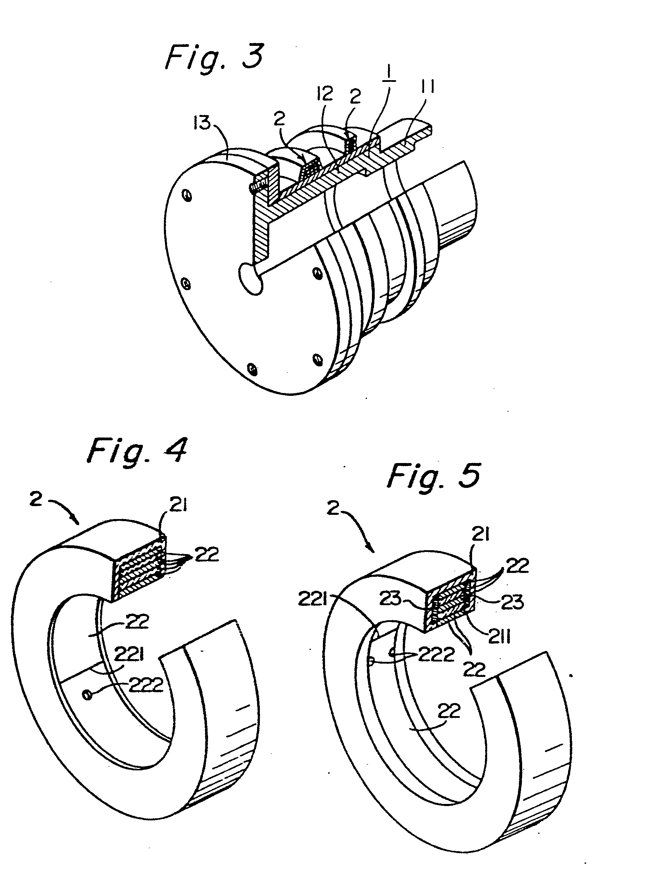

An annular groove former is shown at 2, and its outside surface has a shape conforming to the shape of the inside surface of an annular groove to be formed. The annular groove former 2 consists of a core 22 with a thin surface layer 21 made of an elastic material such as rubber and a core 22 is covered with the surface layer 21. The layer is located so as to be at least between the core 22 and the molding material 5. The core can be of an assembly of thin elements 22 stacked concentrically, or if desired, the core may be made of a single material, instead of an assembly of such elements. The surface layer 21 is an annular structure having a trapezoidal (i.e. closed) cross-section or a trough-like cross-section, for instance having a base with two sides perpendicular thereto and an open side opposite the base (see Figures 3 and 4), or such a cross-section having both free ends further bent inwardly to form flanges 211 (Figure 5). A mold-release layer such as a film of polyvinyl alcohol is provided on the outside surface of the surface layer. The mold-release layer may be a layer of silicone rubber, or the entire surface layer 21 may be made of silicone rubber. Each of the elements 22 constituting the core is an annular structure having one recess 221 and optionally, a small hole 222. At least one of these elements, especially the innermost element, may be magnetic (for example, made of an elastic material containing a magnetic material). If the mold bodies 1 and 1' are made of metal, such a core element can be fixed easily to a desired part of the mold bodies.

The annular groove former 2 shown in Figure 5 is made, as shown in Figure 6, by fitting elements 22 successively (from right to left in the drawing) into the space surrounded by the surface layer 21. As required, auxiliary cores 23 may be used. Then, the annular groove former 2 is mounted on a predetermined position of the end portions 12 and 12' of the mold bodies 1 and 1', and clamped to support shaft 3 by clamping means 4. Thus, a mold for the production of a reinforced plastic pipe coupling having annular grooves in accordance with this invention is formed. This mold can be disassembled by separating the annular groove formers 2 from the mold bodies 1 and 1', and successively separating the elements 22 from the surface layer 21. For ease of assembling and disassembling, the elements 22 are preferably made of an elastic material such as metals, plastics and rubbers.

The method of this invention is practiced in the following manner using the mold described hereinabove.

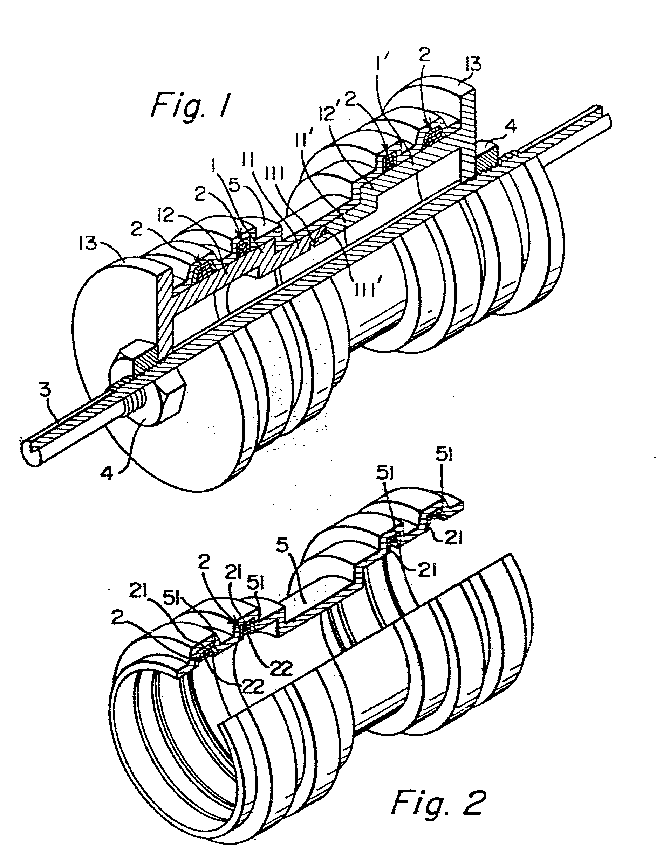

First, the mold is produced by mounting annular groove formers 2 consisting of a surface layer 21 of an elastic material and a core composed of an assembly of concentrically stacked elements 22 (the core may consists of a single element as stated hereinabove) on predetermined positions of the mold bodies 1 and 1'. A molding material obtained by impregnating a mat or sheet of glass fibers with a solution containing an unsaturated polyester resin and a curing agent is wrapped around the mold to form a layer 5 of the molding material which is then cured (Figure 1). When the mold bodies 1 and 1' are removed from the cured product, the groove former 2 remains in an annular groove 51 formed in the inside surface of the mold material layer 5 (Figure 2). Then, the elements 22 are successively removed by inserting a pointed tool into the recesses 221 or small holes 222 beginning with the innermost element 22. Finally, the surface layer 21 is removed in a peeling manner thereby to separate the annular groove former 2 from the inner surface of the annular groove 51. Thus, a reinforced plastic pipe coupling having annular grooves in its inner surface is obtained.

Since the method for producing a reinforced plastic tubular body in accordance with this invention involves mounting an annular groove former consisting of a surface layer of an elastic material and a core covered with the surface layer on predetermined positions of mold bodies, forming a layer of a molding material around the resulting assembly and then curing the molding material layer, an annular groove having a desired shape and superior dimensional accuracy can be formed. Furthermore, since the annular groove former is separated after the separation of the mold bodies while disassembling the groove former successively into its constituent elements, the annular groove former can be easily separated from the resulting annular groove. Accordingly, the molding can be performed with good efficiency.

The mold for the production of reinforced plastic tubular bodies in accordance with this invention consists of a mold body and detachably mounted at a predetermined position thereof, an annular groove former composed of a surface layer of an elastic material and a core covered with the surface layer. Accordingly, after a molding materal layer is formed on the mold and cured, the annular groove former can be easily separated from the resulting annular groove while disassembling it. A reinforced plastic tubular body having the desired shape and superior dimensional accuracy can thus be provided advantageously.

## Claims

1. A method of producing a reinforced plastic tubular body having an internal annular groove, which comprises mounting an annular groove former (2) at a predetermined position on a mold body (1), forming a layer (5) of a molding material around the resulting assembly, curing the layer (5) of molding material and separating the mold (1) from the cured layer (5) of the molding material characterised in that the annular groove former includes a core (22) and a surface layer of elastic material (21) provided so as to be between the core (22) and the layer (5) of molding material, and in that after separating the mold body (1) from the cured layer (5) the annular groove former (2) is removed from the internal groove thus formed in the cured layer (5) of molding material by removing the core (22) and the surface layer (21) from said groove in that sequence.

2. A mold for the production of a reinforced plastic tubular body having an internal annular groove, said mold comprising a mold body (1) and detachably mounted on a predetermined position thereon, an annular groove former (2), characterised in that said groove former (2) includes a core (22) and a surface layer of elastic material (21) provided so as to be, in use, between the core (22) and a layer of molding material formed around the mold, and in that said core (22) is removable from an internal annular groove formed in a layer of molding material formed on the mold prior to removal of said surface layer (21) from said groove.

3. A mold according to claim 2, wherein the core (22) consists of a plurality of concentrically arranged elements (21, 22, 23).

4. A mold according to claim 3, wherein at least one of the elements (21, 22, 23) of the core is magnetic.

5. A mold according to claim 2, 3 or 4, wherein the core (22) has at least one recess (221).

6. A mold according to claim 2, 3, 4 or 5, wherein the surface layer (21) has a mold-release layer at its outside surface.

7. A mold according to claim 2, 3, 4, 5 or 6, wherein the surface layer (21) is made of silicone rubber.

## Revendications

1. Procédé pour fabriquer un corps tubulaire en matière plastique renforcée comportant une gorge circulaire intérieure, ce procédé consistant à monter un élément (2) de formation de gorge circulaire à un endroit prédéterminé sur un corps (1) de moule, à former une couche (5) d'une matière de moulage autour de l'assemblage résultant, à faire durcir la couche (5) de matière de moulage et à séparer le moule (1) de la couche durcie (5) de matière de moulage, caractérisé par le fait que l'élément de formation de gorge circulaire comprend un noyau (22) et une couche superficielle de matière élastique (21) disposée de manière à se trouver entre le noyau (22) de la couche (5) de matière de moulage, et par le fait qu'après avoir séparé le corps (1) de moule de la couche durcie (5), on enlève l'élément (2) de formation de gorge annulaire de la gorge intérieure ainsi formée dans la couche durcie (5) de matière de moulage en enlevant le noyau (22) et la couche superficielle (21) de ladite gorge au cours de cette séquence.

2. Moule pour la fabrication d'un corps tubulaire en matière plastique renforcée comportant une gorge circulaire intérieure, ledit moule comprenant un corps (1) de moule et, monté de façon détachable à un endroit prédéterminé sur ce corps, un élément (2) de formation de gorge circulaire, caractérisé par le fait que ledit élément (2) de formation de gorge comprend un noyau (22) et une couche superficielle de matière élastique (21) disposée de manière à se trouver, pendant l'utilisation, entre le noyau (22) et une couche de matière de moulage formée autour du moule et que ledit noyau (22) peut être enlevé d'une gorge circulaire intérieure formée dans une couche de matière de moulage formée sur le moule avant l'enlèvement de ladite couche superficielle (21) de ladite gorge.

3. Moule suivant la revendication 2, dans lequel le noyau (22) est constitué par un pluralité d'éléments (21, 22, 23) disposés concentriquement.

4. Moule suivant la revendication 3, dans lequel au moins un des éléments (21, 22, 23) du noyau est magnétique.

5. Moule suivant les revendications 2, 3 et 4, dans lequel le noyau (22) comporte au moins un évidement (221).

6. Moule suivant les revendications 2, 3, 4 ou 5, dans lequel la couche superficielle (21) comporte une couche de démoulage sur sa surface extérieure.

7. Moule suivant les revendications 2, 3, 4, 5 ou 6, dans lequel la couche superficielle (21) est en caoutchouc de silicone.

## Patentansprüche

1. Verfahren zur Herstellung eines rohrförmigen verstärkten Kunststoffkörpers mit einer inneren Ringnut, indem ein Ringnut-Gegenstück (2) auf einer vorbestimmten Stelle eines Formkörpers (1) angeordnet, eine Lage (5) eines Formstoffs un diese Anordnung angeformt, die Lage (5) des Formstoffs gehärtet und die Form von der Lage (5) entfernt wird, dadurch gekennzeichnet, daß das Ringnut-Gegenstück (2) aus einem Kern (22) und einer Oberflächenschicht (21) aus elastischem Material derart aufgebaut ist, daß sich beim Anformen die Schicht des elastischen Materials (21) zwischem dem Kern (22) und der Lage (5) befindet, und daß nach Entfernung des Formkörpers (1) von der gehärteten Lage (5) das Ringnut-Gegenstück (2) aus der Innennut der Lage (5) aus Formwerkstoff dadurch entfernt wird, daß man zuerst den Kern und dann die Schicht (21) aus der Nut entnimmt.

2. Form zur Herstellung eines rohrförmigen verstärkten Kunststoffkörpers mit einer inneren Ringnut aus einem Formkörper (1) und von diesem an einer vorbestimmten Stelle abnehmbar montiert ein Ringnut-Gegenstück (2), dadurch gekennzeichnet, daß das Ringnut-Gegenstück (2) einen Kern (22) und eine Oberflächenschicht aus elastischem Material (21) in solcher Anordnung aufweist, daß die Oberflächenschicht (21) zwischen Kern (22) und Formwerkstoff zu liegen kimmt, wobei zuerst der Kern (22) aus der Ringnut des Formwerkstoffs und anschließend die Oberflächenschicht (21) entfernbar ist.

3. Form nach Anspruch 2, dadurch gekennzeichnet, daß der Kern (22) aus einer Vielzahl von konzentrisch angeordneten Elementen (22, 23) besteht.

4. Form nach Anspruch 3, dadurch gekennzeichnet, daß zumindest eines der Elemente (22, 23) des Kerns magnetisch ist.

5. Form nach Anspruch 2 bis 4, dadurch gekennzeichnet, daß der Kern (22) zumindest eine Vertiefung (221) besitzt.

6. Form nach Anspruch 2 bis 5, dadurch gekennzeichnet, daß die Oberflächenlage (21) an der Außenseite eine Schicht aus einem Trennmittel aufweist.

7. Form nach Anspruch 2 bis 6, dadurch gekennzeichnet, daß die Oberflächenlage (21) aus Silicon-Kautschuk besteht.

Fig. 1

Fig. 2

# Fig. 3

# Fig. 4

# Fig. 5

*Fig. 6*

*Fig. 7*